Europäisches Patentamt

**European Patent Office**

**Office européen des brevets**

(11) Publication number: **0 256 239**
**A1**

## EUROPEAN PATENT APPLICATION

(21) Application number: **87108326.7**

(22) Date of filing: **10.06.87**

(51) Int. Cl.⁴: **F17C 13/12 , B60K 15/02 , A62C 3/12 , B65D 25/38**

(30) Priority: **07.08.86 TR 430/86**

(43) Date of publication of application:
**24.02.88 Bulletin 88/08**

(84) Designated Contracting States:
**AT BE CH DE ES FR GB GR IT LI LU NL SE**

(71) Applicant: **EKSPLO KONTROL Patlamayi Önleyici Maddeler Sanayi ve Ticaret A.S. Gümrük Sokak, No: 18 Karaköy Istanbul(TR)**

(72) Inventor: **Sami, Altikan KARAKÖY-Fermeneciler Cad.No. 76/79 Istanbul(TR)**

(74) Representative: **Bardehle, Heinz, Dipl.-Ing. et al Patent- und Rechtsanwälte Bardehle-Pagenberg-Dost-Altenburg-Frohwi- tter und Partner Galileiplatz 1 Postfach 86 06 20 D-8000 München 86(DE)**

(54) Filling material for a container for preventing explosions.

(57) The invention provides a container with a filling material for preventing the explosion of explosive liquid, gasous, or powdered aubstances, stored or transported in that container. The filling material is made of metal alloy, preferably of an aluminum alloy and is uniformly distributed within the volume of the container. The filling material occupies a volume in the container between 0.5 and 5 % of the container volume.

BALL SHAPE MATERIAL

Figure 3

EP 0 256 239 A1

## Filling material for a container for preventing explosions

The present invention relates to a container with a filling material for preventing the explosion of explosive liquid, gaseous or powdered substances stored or transported in said container.

The transportation and storage of explosive substances involves a high risk and the material damage due to risky handling methods each year is considerable, not to mention accidents causing injury to human life.

The object of the present invention is to provide a container with a filling material which effectively reduces the risk of explosion and flaring of said substances. A further object of the invention is to prevent corrosion of the inner wall of the container.

In accordance with the present invention, the objects are achieved by a container with a filling material according to the features of claim 1.

The container with the filling material according to the invention eliminates the explosion and flaring of explosive substances like, fuel oil, benzene, benzol, methylethyl ketone, acetone, thinner, ethanol, toluol, ketanol, ether, methane, nonane, decane, propane, butane, pentane, hexane, heptane, octane, ethane, acetylene and similar substances.

An important property of the filling material is the promotion of heat conduction within the container, the avoidance of static electricity build up and absorbance of mechanical impacts to the container from the outside.

The container with a filling material according to the present invention can be applied in auto fuel depots, LPG (liquid petroleum gas) tanks, airplanes, ships, military truck fuel depots, transport tankers on land and sea as well as for petroleum pipelines or natural gas pipelines.

An advantage of the present invention is that the filling material occupies only a minimal percentage of the container volume. According to a preferred embodiment of the present invention the filling material is in the form of a honeycomb shaped net. The net has the advantage that it can be easily inserted into a container and has a high mechanical stability. This form of the filling material as a net is especially suited for large containers such as tankers and also for pipelines.

According to a preferred method of the invention the net is fabricated from a foil, where the foil has a thickness of between 0.04 - 0.08 mm. The foil is cut with special tools in width between 1.8 - 2 - 2.4 mm with spaces of between 0.8 - 2 - 2.4 mm. Then the foil's horizontal surfaces are raised to a vertical position taking on a honeycomb-like structure.

According to a further preferred embodiment of the invention the filling material is made up of individual bodies each formed of crumpled pieces of metal alloy foil. The pieces are preferably strips of metal alloy foil or strips of the honeycomb shape metal net.

The explosion prevention properties of the filling material depends greatly on the physical composition of the metal used. According to the invention an aluminum alloy is preferred with the composition shown in claim 4 or in the detailed table in the description of preferred embodiments.

The density of the alloy is preferably 2.70 - 2.74 g/cm$^3$. Preferably the filling material in its form for use has a volume weight of about 30.3 g/lt. Thus the ratio of the volume of the filling material is about 1.1 % of the container volume.

Besides its advantage concerning the prevention of explosion the preferred alloy has the further advantage that it has a very long life time. Therefore it can be applied once and used without time limits.

A further advantage of the composition is that it acts as an anode due to low heterogenous and ionizing energies of the alloy.

Further features and advantages of the present invention are given in the following description referring to the drawing:

Fig. 1 shows a perspective view of a roll of raw material for producing the filling material according to the present invention.

Fig. 2 shows the filling material structured as the honeycomb shape material according to the present invention.

Fig. 3 shows a further embodiment of the filling material

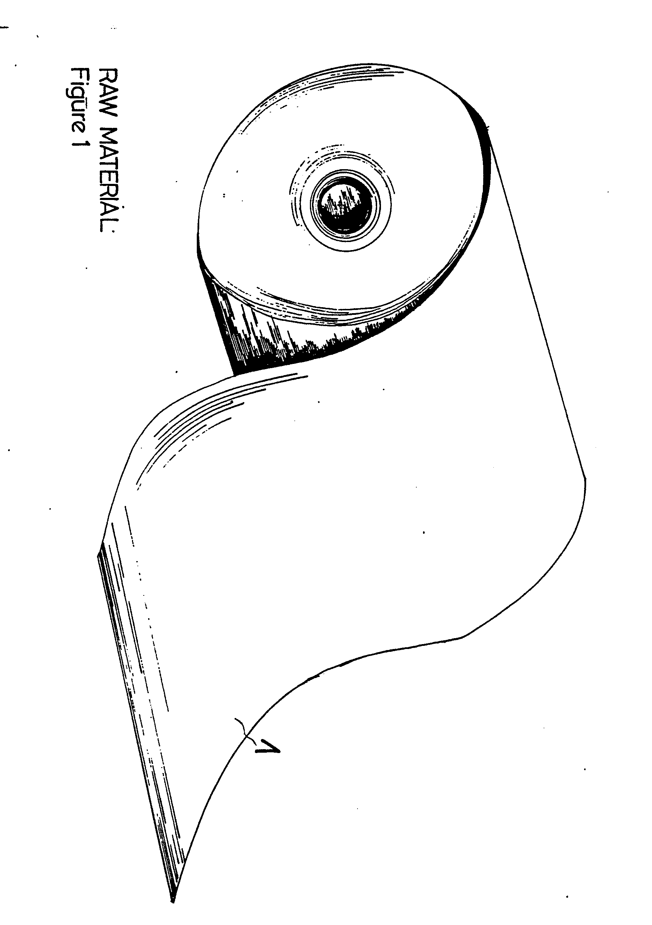

Fig. 1 shows a raw material suited for the production of the filling material according to the present invention. The roll of foil 1 is made of a special aluminum alloy having the following chemical composition:

| Chemical composition | Min | Max |
|---|---|---|
| Si | 0.16 | 1.20 |
| Fe | 0.50 | 1.70 |
| Cu | 1.05 | 1.20 |
| Mn | 1.05 | 1.15 |
| Mg | 0.03 | 1.05 |
| Cr | | 0.05 |
| Zn | | 0.25 |
| Ti | 0.15 | 1.05 |
| Others | 0.01 | 1.15 |
| Al | | Remainder |

All values are percentages of weight.

Furthermore this special aluminum alloy has the following properties:

Ultimate Strength 30.700 P.S.I.

Density 2.70 - 2.74 g/cm³

Tensile Strength 162 /mm²

Specific heat 0.22 cal/gr. C deg.

The foil has a thickness of about 0.04 - 0.08 mm.

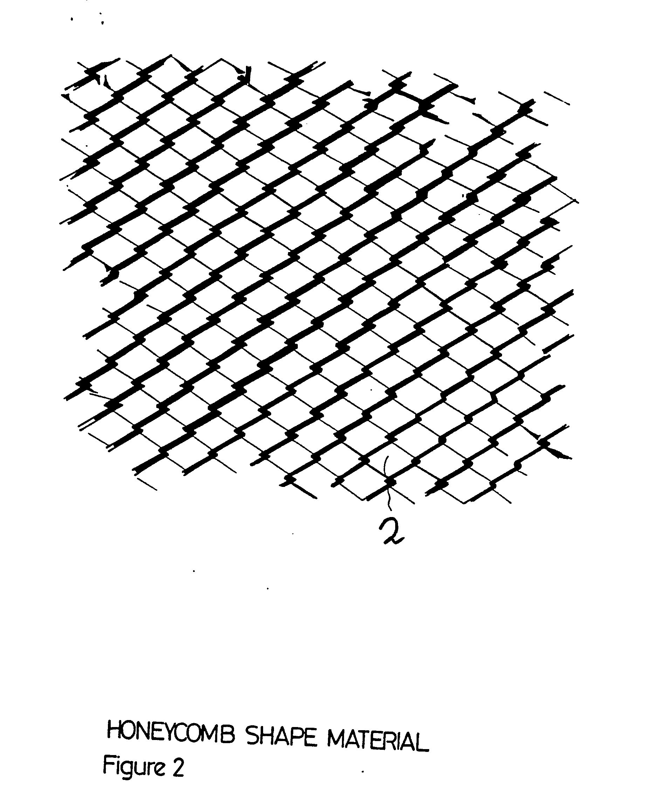

Fig. 2 shows a filling material in form of a honeycomb shaped net 2, ready to be introduced in a container. The honeycomb shape net is made in the form of a 8-sided prisma. The 8-sided prismas have four opposite sides which are 2 x 2 mm, the other four sides are 2 x 1.7 mm. The corner height is 2 mm, these parts are not perpendicular to the open floor. The honeycomb shaped safety 2 net is made of a foil, shown in Figure 1, with a thickness of 0.040 - 0.085 mm and width dimensions of 59 - 102 - 276 mm. When the foil is shaped, it is cut by a special tool to a width of between 1.8 - 2.4 mm with spaces of between 1.8 - 2 - 2.4 mm. Then the foil's horizontal surfaces are raised to a vertical position taking on a honeycomb shape. The size can increase as much as 100 % in one dimension while the honeycomb shape is being formed and decreases as much as 10 % in the other. The honeycomb shape safety net can be formed to rolls.

The honeycomb shaped safety net can be introduced easily in containers, either in the normal form or in the form of rolls.

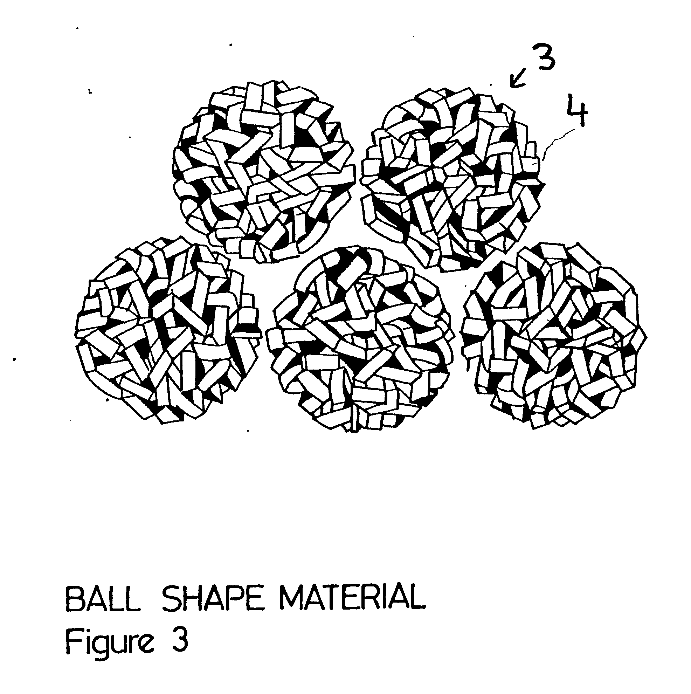

Fig. 3 shows a further embodiment of the filling material according to the present invention. The filling material is shaped in a form of balls 3, made of strips of the safety net according to the embodiment shown in Figure 2. These balls are produced by cutting the honeycomb shape net into strips 4 and crumpling the strips into the shape of balls. It should be noted that the form of ball is a preferred embodiment, but that also other forms can be used, like cubes, cones or any other form.

The form of balls or cubes should be used, when the filling material is to be introduced easily in containers like the tank of a car. The diameter of the balls must be smaller than the opening of the container. The balls can have for example, diameters of 10, 20, 34 or 37 mm.

The filling material shown in the Figures 1 to 3 was used for a great number of tests concerning the preventing of explosion. It was found that the material can prevent explosions in all types of containers and with all kinds of explosive substances.

It was further found that the material prevents corrosion in containers. Furthermore, it was found that the material due to its special alloy composition does not burn even at high temperatures.

Futher it was found that introducing the material in a container has the effect of Faraday cage, preventing static electricity, which can cause corrosion.

## Claims

1. Container with a filling material for preventing the explosion of explosive liquid, gaseous, or powdered substances, stored or transported in that container, **characterized in**
that the filling material is uniformly distributed within the volume of the container,
that the filling material comprises a metal alloy, and
that the volume of the filling material occupies between 0.5 and 5 % of the container volume.

2. Filling material for a container according to claim 1, characterized in that the material is a honeycomb shape net (2).

3. Filling material for a container according to claim 1, characterized in that the filling material is provided in the form of individual bodies of crumpled pieces of metal alloy foil or honeycomb shaped net, preferably balls having a diameter of between 10 and 50 mm.

4. Filling material for a container according to at least one of claims 1 to 3, characterized in that the metal alloy is an aluminum alloy comprising the following weight percentages: 0.16 - 1.20% silicon and/or 0.50 - 1.70% iron and/or 1.05 - 1.20% copper and/or 1.05 - 1.15% manganese and/or 0.03 - 1.05% magnesium and/or 0.05% chromium and/or 0.25% zinc and/Or 0.15 - 1.05% thallium and/or 0.01 - 1.15% other elements.

5. Filling material for a container according to at least one of claims 1 to 4, characterized in that the density of the metal alloy is about 2.70 - 2.74 g/cm$^3$.

6. Filling material for a container according to at least one of claims 1 - 5, characterized in that the weight of the filling material prepared for use is about 30.3 g/lt.

7. Filling material for a container according to at least one of claims 1 - 6, characterized in that the filling material occupies between 1.0 - 1.2 % of the container volume, preferably 1.1 %.

8. Method for producing a filling material according to at least one of claims 1 - 7, characterized in that the material is made of a foil, preferably having a thickness of 0.040 - 0.085 mm, and a width of 59 - 102 - 266 mm, that the foil is cut in widths of between 1.8 - 2 - 2.4 mm with spaces of between 1.8 - 2 - 2.4 mm and that the foil's horizontal surfaces are raised to a vertical position taking on a honeycomb shape.

9. Method for producing a filling material for a container according to claim 8, characterized in that while forming the honeycomb shape the size of the dimensions of the starting material is increased as much as 100 % in one dimension and decreased as much as 10 % in an other dimension.

RAW MATERIAL
Figure 1

HONEYCOMB SHAPE MATERIAL
Figure 2

BALL SHAPE MATERIAL
Figure 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 028 129 (EXPLOSAFE S.A.) * Page 2, lines 6-33; claim 9; figures 1-5 * | 1-3,6 | F 17 C 13/12 B 60 K 15/02 A 62 C 3/12 B 65 D 25/38 |
| X | EP-A-0 179 044 (SCHRENK) * Column 1, lines 7-65 * | 1-3,8 | |
| X | FR-A- 601 374 (VANGINOT) * Page 1, lines 38-54; figures 2,4 * | 1-3 | |
| A | GB-A-1 454 493 (SECRETARY OF STATE FOR DEFENCE) * Page 1, line 86 - page 2, line 2; figures 5,11 * | 1-3 | |
| A | GB-A-1 131 687 (SZEGO) * Claims 1-8; figures 1-9 * | 1-3,7 | TECHNICAL FIELDS SEARCHED (Int. Cl.4) B 65 D F 17 C B 60 K A 62 C |
| A | W. HUFNAGEL: "Aluminium-Schlüssel", edition 2, 1983, pages 38,39,118,119, Aluminium Verlag, Düsseldorf, DE * Pages 38,39,118,119 * | 4,5 | |
| A | EP-A-0 129 653 (POSCHINGER) * Claims 1,2; figures 1-7 * | 1-3 | |

The present search report has been drawn up for all claims

| Place of search | Date of completion of the search | Examiner |
|---|---|---|
| THE HAGUE | 02-11-1987 | BERRINGTON N.M. |